# EUROPEAN PATENT APPLICATION

(11) **EP 4 737 146 A1**
(43) Date of publication of application: **06.05.2026**
(21) Application number: 25213604.9
(22) Date of filing: 05.11.2025
(51) Int. Cl.: B60H 1/00, B60H 1/14, B60K 35/22

(54) **TEMPERATURE MAINTENANCE APPARATUS FOR VEHICLE DISPLAY**

(30) Priority: 05.11.2024 KR 20240155703
(71) Applicant: AUMOVIO Germany GmbH, 60488 Frankfurt am Main (DE)
(72) Inventor: Jeong, Heeyseock, 339-942 Sejong-si (KR)
(74) Representative: Aumovio Corporation

(57) **Abstract**

A temperature maintenance apparatus (1) for a vehicle (2) display, the temperature maintenance apparatus (5) comprising a first connection pipe (10) connected to a display device (5), a second connection pipe (20) having one end portion (21) connected to the first connection pipe (10), and the other end portion (23) connected to a vent hole (6) forming an air flow to the outside of the vehicle (2) when the vehicle (2) is traveling, and a third connection pipe (30) having one end portion (32) connected to at least one among the first connection pipe (10) and the second connection pipe (20), and the other end portion (33) connected to an air conditioning device (7).

## Description

### [Technical Field]

The present invention relates to a temperature maintenance apparatus for a vehicle display, and more specifically to a temperature maintenance apparatus for preventing overheating of a display device installed in a vehicle.

### [Background Art of the Invention]

In general, a vehicle is equipped with a display device which displays the state of the vehicle, driving information, images, maps, and the like. Typically, a display device is placed in an instrument panel and the like of a vehicle, and configured to be electrically connected to a power device of the vehicle to emit light or output a specific image to the interior space of the vehicle in which a passenger is on board.

Such a display device for a vehicle is oriented to a larger size, a higher resolution, a more diversified functional and aesthetic display function in accordance with the demand of consumers, the development of electrical technology, and the development of autonomous driving performance, and the usage time of the display device is also increasing. In addition, there is also a demand for technology for stabilizing the heating temperature of an LCD module, a light source, and an electrical component provided in the display device for a vehicle.

The background technology of the present invention is disclosed in Korean Patent Registration No. 10-2019-0100988 (30, 08, 2019: Title of the Invention: Temperature maintenance apparatus for vehicle display).

### Disclosure of the Invention

### Problems to be Solved

The present invention has been devised to solve the above-described problem, and the purpose of the present invention is to provide a temperature maintenance apparatus for a vehicle display, which is capable of effectively preventing overheating of a vehicle display device.

### [Solution to the Problems]

A temperature maintenance apparatus for a vehicle display according to the present invention includes: a first connection pipe connected to a display device; a second connection pipe having one end portion connected to the first connection pipe, and the other end portion connected to a vent hole forming an air flow to the outside of the vehicle when a vehicle is traveling; and a third connection pipe having one end portion connected to at least one among the first connection pipe and the second connection pipe, and the other end portion connected to an air conditioning device.

When the vehicle is traveling, an air flow from the display device toward the outside of the vehicle may be formed through the second connection pipe, and when the air conditioning device is operating, an air flow from the display device to the air conditioning device may be formed through the third connection pipe.

The first connection pipe may include: a first connection pipe main body disposed to extend from the display device installed in an instrument panel to an engine room, and having a bellows structure; a first inflow end portion formed on one end portion of the first connection pipe main body, airtightly contacting the display device, and communicating with the inside of the display device through an air hole formed in the display device; and a pipe connection end portion formed on the other end portion of the first connection pipe main body, and connected to at least one among the second connection pipe and the third connection pipe.

The pipe connection end portion may include: a connection main body portion connected to communicate with the first connection pipe main body; a first branch connection portion which is formed to be open in one side portion of the connection main body portion, and to which the second connection pipe is detachably assembled; and a second branch connection portion which is formed to be open in the other side portion of the connection main body portion, and to which the third connection pipe is detachably assembled.

The second connection pipe may include: a second connection pipe main body connected to communicate with the first connection pipe; a first exhaust end portion formed on an end portion of the second connection pipe main body, and communicating with the outside of the vehicle through the vent hole; and a backflow prevention device installed on the second connection pipe main body or the first exhaust end portion, and preventing external air from flowing into the vehicle.

The third connection pipe may have a width decreasing from the first connection pipe toward the air conditioning device.

The third connection pipe may include: a third connection pipe main body connected to communicate with at least one among the first connection pipe and the second connection pipe; and a second exhaust end portion formed on an end portion of the third connection pipe main body, connected to the air conditioning device, and forming a flow path through which air flows into the air conditioning device.

The display device may be installed in the instrument panel and connected to the first connection pipe, the vent hole may be disposed on a side surface portion of the vehicle and connected to the second connection pipe, the air conditioning device may be installed in the engine room and connected to the third connection pipe, and the second connection pipe may be disposed to extend in a lateral direction between the first connection pipe and the third connection pipe extending in a front-rear direction.

The display device may include: a display module which displays information; and a cover coupled to the display module, and fixed to the instrument panel, wherein the cover may include a cover main body which covers the display module, and an air hole which is provided in plurality on the cover main body, and some of which are connected to communicate with the first connection pipe.

The air hole may include: an exhaust hole forming a flow path through which air inside the display device flows to the first connection pipe; and an inflow hole forming a flow path through which air flows into the display device, wherein the inflow hole may include a first inflow hole formed in one side portion of the cover, and forming, inside the display device, a first air flow continuing from the one side portion of the cover to the exhaust hole, and a second inflow hole formed in the other side portion of the cover, and forming, inside the display device, a second air flow continuing from the other side portion of the cover to the exhaust hole.

The vent hole may include: a vent inflow end which is in contact with the inside of the vehicle, and to which the second connection pipe is connected; a vent discharge end in contact with the outside of the vehicle; and a vent hole main body which is formed between the vent inflow end and the vent discharge end, and in which an air flow toward the outside of the vehicle is formed due to a difference in pressure formed between the vent inflow end and the vent discharge end when the vehicle is traveling.

The vent inflow end may have a first width, and the second connection pipe may have a second width smaller than the first width, and be installed to cover a portion of the vent inflow end.

The vent inflow end may include: a first inflow end portion which is formed to be open toward the inside of the vehicle, and into which air inside the vehicle flows; and a second inflow end portion to which the second connection pipe is coupled, and into which air inside the display device flows.

The present invention may further include a control device that adjusts the sizes of flow paths of the second connection pipe and the third connection pipe, in accordance with the temperature of the display device and the flow rate of air passing through the first connection pipe.

The control device may include: a temperature sensor installed on the display device; an air blowing device installed in the second connection pipe, and forcibly exhausting the air inside the vehicle to the outside during an on-operation; a flow rate sensor which senses the flow rate of the air passing through the first connection pipe; a flow path opening/closing device installed on at least one among the first connection pipe, the second connection pipe, and the third connection pipe, and flexibly adjusting the size of a flow path; and an electronic control device that controls the operation of the air blowing device and the flow path opening/closing device in response to sensing signals of the temperature sensor and the flow rate sensor.

### [Effects of the Invention]

A temperature maintenance apparatus for a vehicle display according to the present invention connects a first connection pipe, a second connection pipe, and a third connection pipe to a display device, a vent hole, and an air conditioning device, respectively, thereby discharging air inside the display device by an exhaust airflow naturally formed through the vent hole when a vehicle is traveling, and an inflow airflow into the air conditioning device automatically formed when the air conditioning device is operating.

In addition, in the present invention, compared to an example which simply forms an air hole, through which heat may be emitted, in a display device, a flow of air flowing to the inside and the outside of a display is more actively formed, thereby effectively preventing overheating of a display device for a vehicle, and further reducing deterioration in stability of the display device and surrounding components due to the overheating of the display device for a vehicle or heat emitted from the display through an air hole.

In addition, the present invention may be easily implemented by a simple assembly of connecting a first connection pipe, a second connection pipe, and a third connection pipe to a display device, a vent hole, and an air conditioning device, respectively, without having to modify a display device, a vent hole, and an air conditioning device which are typically used.

### [Brief Description of the Drawings]

FIG. 1 is a perspective view schematically illustrating an installation state of a temperature maintenance apparatus for a vehicle display according to an embodiment of the present invention.
FIG. 2 is a conceptual view schematically illustrating a structure of a temperature maintenance apparatus for a vehicle display according to an embodiment of the present invention.
FIG. 3 is a conceptual view illustrated to describe an air flow by a temperature maintenance apparatus for a vehicle display according to an embodiment of the present invention when a vehicle is traveling.
FIG. 4 is a conceptual view illustrated to describe an air flow by a temperature maintenance apparatus for a vehicle display according to an embodiment of the present invention in a state in which an air conditioning device is operating when a vehicle is traveling.
FIG. 5 is a conceptual view illustrated to describe an air flow by a temperature maintenance apparatus for a vehicle display according to an embodiment of the present invention in a state in which an air conditioning device is operating when a vehicle is stationary.
FIG. 6 is a conceptual view schematically illustrating a second connection pipe and the width of a flow path of the second connection pipe according to an embodiment of the present invention.
FIG. 7 is an exploded perspective view of key components, which is schematically illustrating a display device and a first connection pipe according to an embodiment of the present invention.
FIG. 8 is a perspective view schematically illustrating a vent hole and a second connection pipe according to an embodiment of the present invention.
FIG. 9 is a conceptual view illustrated to describe an air flow by a vent hole and a second connection pipe according to an embodiment of the present invention.
FIG. 10 is a conceptual view schematically illustrating a structure of a control device according to an embodiment of the present invention.

### [Detailed Description for Carrying Out the Invention]

Hereinafter, a temperature maintenance apparatus for a vehicle display according to an embodiment of the present invention will be described with reference to the accompanying drawings. In this process, the thickness of lines, the size of components, or the like illustrated in the drawings may be exaggerated for clarity and convenience of description.

In addition, the following terms are defined in consideration of functions of the present invention, which may vary depending on the intention or practice of a user or an operator. Therefore, the definitions of these terms should be made based on the contents throughout this specification.

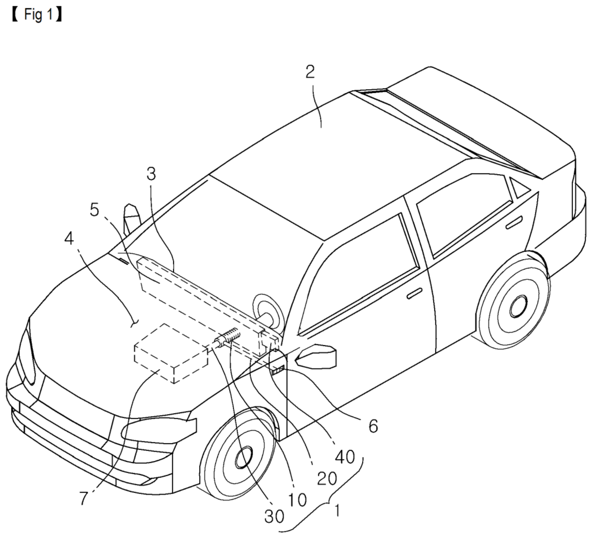

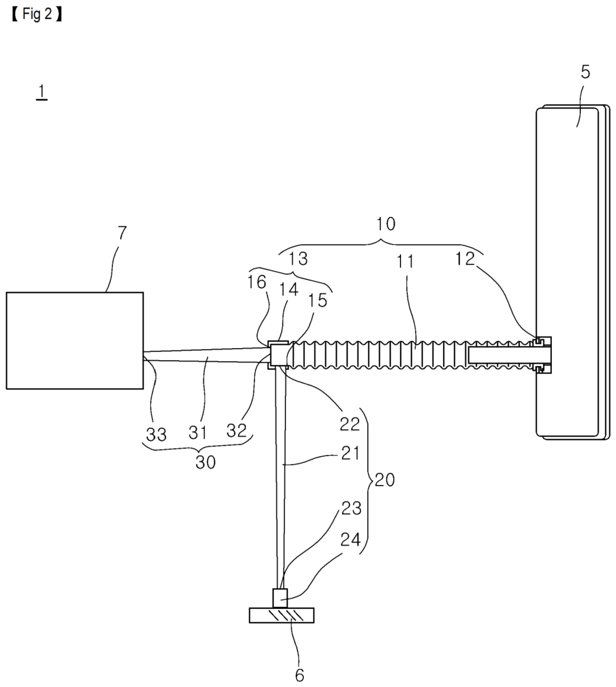

FIG. 1 is a perspective view schematically illustrating an installation state of a temperature maintenance apparatus for a vehicle display according to an embodiment of the present invention, and FIG. 2 is a conceptual view schematically illustrating a structure of a temperature maintenance apparatus for a vehicle display according to an embodiment of the present invention.

FIG. 1 is a perspective view schematically illustrating an installation state of a temperature maintenance apparatus for a vehicle display according to an embodiment of the present invention, and FIG. 2 is a conceptual view schematically illustrating a structure of a temperature maintenance apparatus for a vehicle display according to an embodiment of the present invention.

Referring to FIG. 1 and FIG. 2, a temperature maintenance apparatus (1) for a vehicle (2) display according to an embodiment of the present invention includes a first connection pipe (10), a second connection pipe (20), and a third connection pipe (30).

The first connection pipe (10) is connected to a display device (5). The display device (5) may be installed in an instrument panel (3), and a display surface of the display device (5) may face the interior of the vehicle, which is a passenger space for a passenger including a driver. The first connection pipe (10) may extend from the display device (5) installed in the instrument panel (3) to an engine room (4).

The second connection pipe (20) has one end portion connected to the first connection pipe (10), and the other end portion connected to a vent hole (6). The vent hole (6) is a passage forming an air flow to the outside of the vehicle (2) when the vehicle (2) is traveling. Due to the influence of a discharge airflow formed on the vent hole (6) when the vehicle (2) is traveling, an air flow to the outside of the vehicle (2) may also be formed on the second connection pipe (20), which may affect the inside of the display device (5) through the first connection pipe (10).

By connecting the second connection pipe (20) to the vent hole (6), air inside the display device (5) may be exhausted to the outside of the vehicle (2) through the vent hole (6) when the vehicle (2) is traveling. Air discharged from the display device (5) to the first connection pipe (10) may be exhausted to the outside through the second connection pipe (20) and the vent hole (6).

The vent hole (6) may be formed to penetrate a vehicle body. The vent hole (6) may be formed to extend from the inside to the outside of the vehicle (2), and both end portions (a vent inflow end (61) and a vent discharge end (64) to be described later) thereof may be in contact with the inside and the outside of the vehicle (2), respectively. When the vehicle (2) is traveling, a high-speed airflow is formed around an outer end portion (the vent discharge end (64) to be described later) of the vent hole (6), which is in contact with the outside of the vehicle (2), and due to the speed of the airflow, the outer end portion of the vent hole (6) may be lower in pressure than the inside of the vehicle.

That is, the outer end portion of the vent hole (6) which is in contact with the outside of the vehicle (2) is relatively lower in pressure than an inner end portion thereof which is in contact with the inside of the vehicle (2). When the vehicle (2) is traveling, due to the above-described difference in pressure, air inside the vehicle (2) may naturally flow to the outside of the vehicle (2) through the vent hole (6).

The vent hole (6) may be formed on a side surface portion of a driver's side of the vehicle (2) to extend to the inside and outside of the engine room (4). When the vehicle (2) is traveling, even if the temperature of an engine (not shown) mounted in the engine room (4) rises, air inside the engine room (4) may naturally be exhausted to the outside of the vehicle (2) through the vent hole (6), and an airflow in which air at room temperature outside the vehicle (2) flows into the engine room (4) may be formed. Accordingly, the temperature inside the engine room (4) may be maintained in a desired temperature range, and the temperature inside the engine room (4) may be prevented from excessively rising.

An internal space of the vehicle (2) may be divided into an engine room (4) space, a passenger space, a trunk space, and the like, and the vent hole (6) may be formed to communicate with at least one among the spaces. That is, the vent hole (6) may be formed to extend from the engine room (4) to an outer surface of the vehicle, and although not illustrated in the drawings of the present invention, may be formed to extend from the passenger space or the trunk space to the outer surface of the vehicle.

The display device (5) may be installed at a different position other than in the instrument panel (3), and a plurality of different display devices may be disposed in a plurality of different places spaced apart from each other. The display device (5) may be connected to one or a plurality of the vent holes (6) by the second connection pipe (20). The display device (5) may be connected to communicate with a closest vent hole (6) by the second connection pipe (20).

One end portion of the third connection pipe (30) is connected to at least one among the first connection pipe (10) and the second connection pipe (20), and the other end portion thereof is connected to an air conditioning device (7). The air conditioning device (7) is a device which controls temperature, humidity, airflow, cleanliness, and the like in order to maintain the quality of air inside the vehicle pleasant. By connecting the third connection pipe (30) to an air inflow path of the air conditioning device (7), when the air conditioning device (7) is operating, an air flow flowing into the air conditioning device (7) may be formed on the third connection pipe (30), which may affect the inside of the display device (5) through the first connection pipe (10).

As the air conditioning device (7), a heating, ventilating and air conditioning (HVAC) system may be applied. The air conditioning device (7) may selectively draw in, if necessary, at least one among external air and internal air, and then allow the air to pass through a heat exchanger, thereby heating or cooling the air to a desired temperature, followed by distributing the air to a required section, and may repeat a process of drawing in the internal air to purify and circulate the air.

By connecting the third connection pipe (30) to the air conditioning device (7), the air inside the display device (5) may be forced to flow to the air conditioning device (7) when the air conditioning device (7) is operating. The air discharged from the display device (5) to the first connection pipe (10) may flow into the air conditioning device (7) through the third connection pipe (30).

The display device (5) may be installed in the instrument panel (3), and may be connected to the first connection pipe (10). The air conditioning device (7) may be installed in the engine room (4), and may be connected to the third connection pipe (30). The vent hole (6) may be formed to penetrate in a lateral direction from the engine room (4) to a side surface portion of the vehicle (2). The vent hole (6) may be positioned between the air conditioning device (7) and the display device (5), and may be connected to the second connection pipe (20).

The first connection pipe (10) may be disposed to extend in a front-rear direction from the display device (5) installed in the instrument panel (3) toward the inside of the engine room (4). By using one first connection pipe (10), while minimizing interference with other components installed in the instrument panel (3), a new air flow path continuing from the display device (5) to the inside of the engine room (4) may be formed.

The air conditioning device (7) may be positioned in front of the instrument panel (3), and the third connection pipe (30) may be disposed in front of the first connection pipe (10) to extend in a front-rear direction toward the air conditioning device (7). The second connection pipe (20) may be disposed to extend in a lateral direction between the first connection pipe (10) and the third connection pipe (30) extending in the front-rear direction. As described above, the second connection pipe (20) and the third connection pipe (30) may be space-efficiently disposed by utilizing a spare space inside the engine room (4).

The display device (5) has a main function of providing a driver with information necessary for driving, and thus may be positioned close the driver's seat. By connecting the second connection pipe (20) to a vent hole (6) (commonly called a side airflow vent hole) positioned closest to the driver's seat, the length of the second connection pipe (20) may be reduced to a minimum. Accordingly, pressure loss due to interference with an inner wall portion of a flow path may be minimized, and exhaust performance to the outside of the display device (5) may be stably secured when the vehicle (2) is traveling.

The first connection pipe (10), the second connection pipe (20), and the third connection pipe (30) may be manufactured integrally connected to each other, and then while being disposed inside the engine room (4), each end portion thereof may be connected to the display device (5), the vent hole (6), and the air conditioning device (7). In addition, the first connection pipe (10), the second connection pipe (20), and the third connection pipe (30) may be manufactured separately from each other, and then one end portion thereof may be connected to the display device (5), the vent hole (6), and the air conditioning device (7), respectively, and the other end portion thereof may be interconnected and assembled inside the engine room (4).

In addition, the first connection pipe (10), the second connection pipe (20), and the third connection pipe (30) may be detachably connected to each other. Accordingly, if necessary for maintenance, management, repair, and the like of the vehicle, the first connection pipe (10), the second connection pipe (20), and the third connection pipe (30) may be temporarily separated and then reassembled, and one among the first connection pipe (10), the second connection pipe (20), and the third connection pipe (30) may be selectively replaced.

In addition, if necessary, only one among the second connection pipe (20) and the third connection pipe (30) may be selectively connected to the first connection pipe (10). For example, the third connection pipe (30) may be separated and removed from the first connection pipe (10) and the second connection pipe (20), and exhaust of the display device (5) may be implemented by using only the first connection pipe (10) and the second connection pipe (20). In addition, the second connection pipe (20) may be separated and removed from the first connection pipe (10) and the third connection pipe (30), and exhaust of the display device (5) may be implemented by using only the first connection pipe (10) and the third connection pipe (30).

The temperature maintenance apparatus (1) for the vehicle (2) display according to the present invention connects the first connection pipe (10), the second connection pipe (20), and the third connection pipe (30) to the display device (5), the vent hole (6), and the air conditioning device (7), respectively, as described above, and thus may implement an operation of discharging the air inside the display device (5) by an exhaust airflow naturally formed through the vent hole (6) when the vehicle (2) is traveling, and an inflow airflow into the air conditioning device (7) automatically formed when the air conditioning device (7) is operating.

Referring to FIG. 1 and FIG. 2, the first connection pipe (10) according to an embodiment of the present invention may include a first connection pipe main body (11), a first inflow end portion (12), and a pipe connection end portion (13).

The first connection pipe main body (11) may have a structure of a tube or a hose having a flow path through which air can flow therein. The first connection pipe main body (11) may be disposed to extend from the display device (5) installed in the instrument panel (3) to the engine room (4). The first connection pipe main body (11) may have a corrugated bellows structure. Accordingly, when the first connection pipe (10) is installed, the extension direction and the extension shape thereof may be changed freely, and the extension length thereof may also be adjusted freely and flexibly.

The first inflow end portion (12) is a device part of the first connection pipe (10), which is in contact with the display device (5), and may be formed to be open at a rear end portion of the first connection pipe main body (11). The first inflow end portion (12) may airtightly contact the display device (5). The first inflow end portion (12) may communicate with the inside of the display device (5) through an air hole (54) formed in the display device (5).

The pipe connection end portion (13) may be connected to communicate with a front end portion of the first connection pipe main body (11), and may be connected to at least one among the second connection pipe (20) and the third connection pipe (30). The pipe connection end portion (13) may be manufactured separately from the first connection pipe main body (11), and then assembled to the front end portion of the first connection pipe main body (11). The first connection pipe (10), the second connection pipe (20), and the third connection pipe (30) may be detachably connected to each other by the pipe connection end portion (13).

The pipe connection end portion (13) according to an embodiment of the present invention may include a connection main body portion (14), a first branch connection portion (15), and a second branch connection portion (16).

The connection main body portion (14) is a device part in which the first connection pipe (10), the second connection pipe (20), and the third connection pipe (30) are detachably connected to each other. The connection main body portion (14) has a chamber structure, the inside of which is hollow, and is inserted into an end portion of the first connection pipe main body (11) to be connected to communicate with an internal flow path of the first connection pipe main body (11).

Depending on the vehicle (2), positions, sizes, and the like of the display device (5), the vent hole (6), and the air conditioning device (7) may vary, and accordingly, specifications (end portion shape, size, etc.) of the first connection pipe (10), the second connection pipe (20), and the third connection pipe (30) and connection positions thereof may also vary. Depending on the specifications (end portion shape, size, etc.) of the first connection pipe (10), the second connection pipe (20), and the third connection pipe (30) and the connection positions thereof, the connection main body portion (14) may be manufactured in various forms different from each other, and applied.

The first branch connection portion (15) may be formed to be open in one side portion of the connection main body portion (14), and the second connection pipe (20) may be detachably assembled thereto. The second branch connection portion (16) may be formed to be open in the other side portion of the connection main body portion (14), and third connection pipe (30) may be detachably assembled thereto. The first branch connection portion (15) and the second branch connection portion (16) may be formed in a left side portion and a front portion of the connection main body portion (14), respectively.

In detachably assembling the second connection pipe (20) and the third connection pipe (30) to the first branch connection portion (15) and the second branch connection portion (16), the present invention is not limited to a specific structure and shape, including commonly known technology, as long as a tube body can be detachably assembled, and therefore, detailed descriptions of structures and functions of the first branch connection portion (15) and the second branch connection portion (16) are omitted.

By the first branch connection portion (15) and the second branch connection portion (16), the first connection pipe (10), the second connection pipe (20), and the third connection pipe (30) may be detachably connected to each other. Accordingly, if necessary for maintenance, management, repair, and the like of the vehicle, the first connection pipe (10), the second connection pipe (20), and the third connection pipe (30) may be temporarily separated and then reassembled, and one among the first connection pipe (10), the second connection pipe (20), and the third connection pipe (30) may be selectively replaced.

In addition, by the first branch connection portion (15) and the second branch connection portion (16), if necessary, only one among the second connection pipe (20) and the third connection pipe (30) may be selectively connected to the first connection pipe (10). For example, if it is intended to exhaust air to the outside of the display device (5) only when the vehicle is traveling, or if an air flow through the third connection pipe (30) is unstable due to damage, malfunction, or the like of the air conditioning device (7), the third connection pipe (30) may be separated and removed from the first connection pipe (10) and the second connection pipe (20), and exhaust of the display device (5) may be implemented by using only the first connection pipe (10) and the second connection pipe (20). In addition, the second connection pipe (20) may be separated and removed from the first connection pipe (10) and the third connection pipe (30), and exhaust of the display device (5) may be implemented by using only the first connection pipe (10) and the third connection pipe (30).

The first branch connection portion (15) and the second branch connection portion (16) may have structures in which the second connection pipe (20) and the third connection pipe (30) are detachable, and at the same time, are openable, respectively. The first branch connection portion (15) and the second branch connection portion (16) may each include a door (not shown) which is openable, and the door may have a structure of a sliding door, or a rotating door which rotates around a hinge axis.

In a state in which the door is open, the first branch connection portion (15) and the second branch connection portion (16) may be coupled, and connected to the second connection pipe (20) and the third connection pipe (30), respectively. In a state in which the second connection pipe (20) or the third connection pipe (30) is separated from the first branch connection portion (15) or the second branch connection portion (16), respectively, the door of the first branch connection portion (15) or the door of the second branch connection portion (16) may freely be openable by being pushed or tilted by a person's hand or a tool.

Referring to FIG. 1 and FIG. 2, the second connection pipe (20) according to an embodiment of the present invention may include a second connection pipe main body (21), a second inflow end portion (22), a first exhaust end portion (23), and a backflow prevention device (24).

The second connection pipe main body (21) may have a structure of a tube or a hose having a flow path through which air can flow therein. The second connection pipe main body (21) may be connected to communicate with the first connection pipe (10) inside the engine room (4) by the second inflow end portion (22).

The second inflow end portion (22) is a device part of the second connection pipe (20), which is connected to at least one among the first connection pipe (10) and the third connection pipe (30). The second inflow end portion (22) may be airtightly assembled to the first branch connection portion (15), and may communicate with the inside of the first connection pipe (10) through the first branch connection portion (15). In addition, the second inflow end portion (22) may be detachably assembled to the first branch connection portion (15).

The first exhaust end portion (23) is a device part of the second connection pipe (20), which is in contact with the vent hole (6). The first exhaust end portion (23) may airtightly contact the vent hole (6). The second connection pipe main body (21) may be disposed to extend to a left side in the front end portion of the first connection pipe (10), and the second inflow end portion (22) and the first exhaust end portion (23) may be formed to be open in a right-side end portion and a left-side end portion of the second connection pipe main body (21), respectively. The first exhaust end portion (23) may be connected to the vent inflow end (61) (to be described later) of the vent hole (6) open to the inside of the engine room (4), and may communicate with the outside of the vehicle (2) through the vent hole (6).

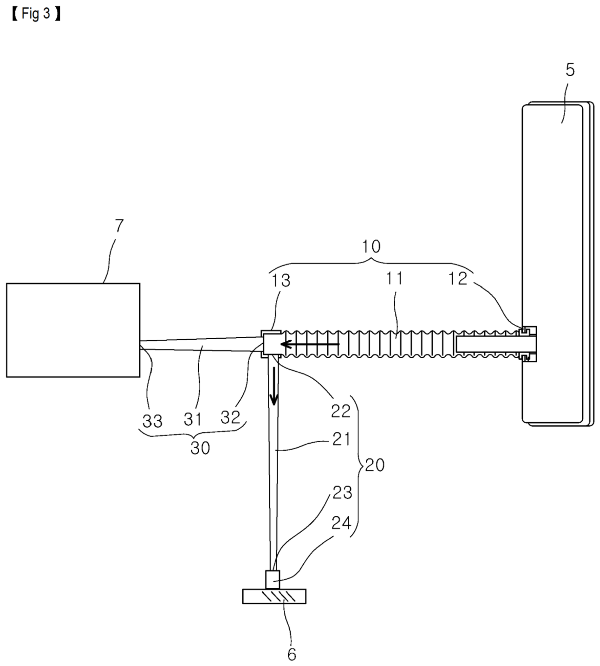

FIG. 3 is a conceptual view illustrated to describe an air flow by a temperature maintenance apparatus for a vehicle display according to an embodiment of the present invention when a vehicle is traveling.

Referring to FIG. 3, when the vehicle (2) is traveling, an 'L'-shaped air flow from the display device (5) toward the outside of the vehicle (2) may be formed through the second connection pipe (20). Due to the influence of a discharge airflow formed on the vent hole (6) when the vehicle (2) is traveling, an air flow to the outside of the vehicle (2) may also be formed on the second connection pipe (20), and by connecting the second connection pipe (20) to the vent hole (6), the air inside the display device (5) may be exhausted to the outside of the vehicle (2) through the first connection pipe (10), the second connection pipe (20), and the vent hole (6) when the vehicle (2) is traveling.

The backflow prevention device (24) is a device part for preventing external air from flowing into the vehicle (2), and may be installed on the second connection pipe main body (21) or the first exhaust end portion (23). The backflow prevention device (24) may implement an operation of opening a flow path if the air inside the vehicle (2) flows to the outside, and closing the flow path if air outside the vehicle (2) flows to the inside.

As the backflow prevention device (24), an air-flap, a check valve, or the like may be applied. The air-flap may include a flap rotatably installed on a flow path of the second connection pipe (20). If there is an air flow to the outside of the vehicle (2) generated due to a difference in pressure between inner and outer ends of the vent hole (6), the flap rotates, thereby opening a flow path, and if there is no difference in the pressure, the flap returns to its original position by its own weight, thereby closing the flow path, and this operation may prevent air outside the vehicle (2) from flowing back to the inside.

The backflow prevention device (24) may be disposed on the side of a downstream close the first exhaust end portion (23) of the second connection pipe main body (21), and may be disposed on the first exhaust end portion (23). The backflow prevention device (24) is not limited to a specific structure and shape, including commonly known technology other than the above-described air-flap and check valve, as long it can prevent external air from flowing into the vehicle (2). If a backflow prevention device (not shown) for the vent hole (6) is pre-installed on the vent hole (6) of the vehicle (2), the installation of the backflow prevention device (24) may be omitted.

Referring to FIG. 1 and FIG. 2, the third connection pipe (30) according to an embodiment of the present invention may include a third connection pipe main body (31), a third inflow end portion (32), and a second exhaust end portion (33).

The third connection pipe main body (31) may have a structure of a tube or a hose having a flow path through which air can flow therein. The third connection pipe main body (31) may be connected to communicate with at least one among the first connection pipe (10) and the second connection pipe (20) inside the engine room (4) by the third inflow end portion (32).

The third inflow end portion (32) is a device part of the third connection pipe (30), which is connected to at least one among the first connection pipe (10) and the third connection pipe (30). The third inflow end portion (32) may be airtightly assembled to the second branch connection portion (16), and may communicate with the inside of the first connection pipe (10) through the second branch connection portion (16). In addition, the third inflow end portion (32) may be detachably assembled to the second branch connection portion (16).

The second exhaust end portion (33) is a device part of the third connection pipe (30), which is in contact with the air conditioning device (7). The second exhaust end portion (33) may airtightly contact the air conditioning device (7). The third connection pipe main body (31) may be disposed to extend toward front in the front end portion of the first connection pipe (10), and the third inflow end portion (32) and the second exhaust end portion (33) may be formed to be open in a rear end portion and a front end portion of the third connection pipe main body (31), respectively. The second exhaust end portion (33) may be connected to communicate with the air inflow path of the air conditioning device (7).

The third connection pipe (30) may be connected to a typical air conditioning device (7). By the third connection pipe (30), a new air inflow path may be formed in the typical air conditioning device (7) having an external air inflow path (not shown) and an internal air inflow path (not shown). In other words, the air conditioning device (7) may have a new air inflow path corresponding to the third connection pipe (30) in addition to the typical external air inflow path and the typical internal air inflow path.

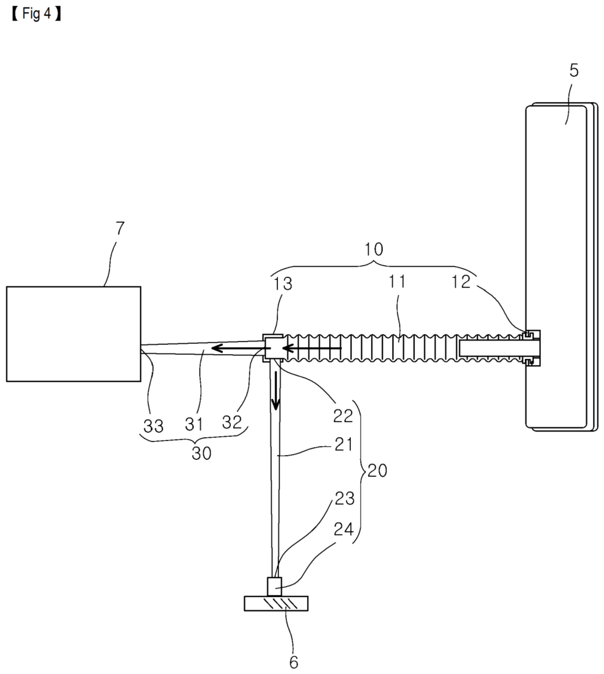

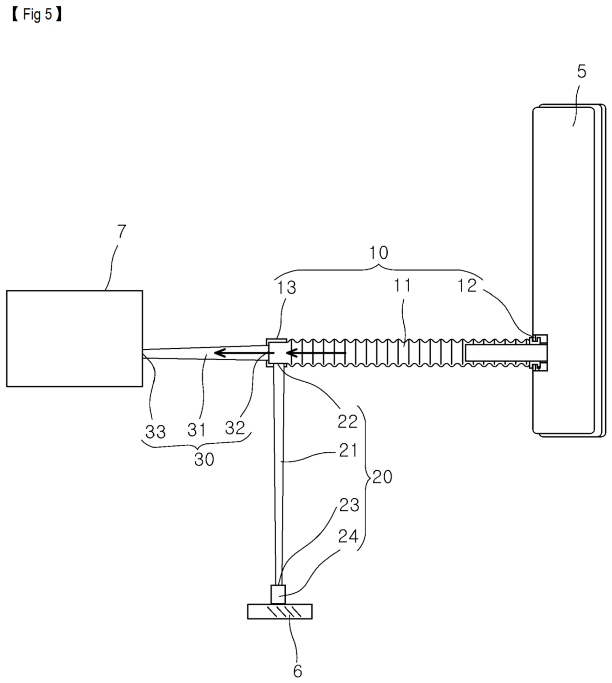

FIG. 4 is a conceptual view illustrated to describe an air flow by a temperature maintenance apparatus for a vehicle display according to an embodiment of the present invention in a state in which an air conditioning device is operating when a vehicle is traveling, and FIG. 5 is a conceptual view illustrated to describe an air flow by a temperature maintenance apparatus for a vehicle display according to an embodiment of the present invention in a state in which an air conditioning device is operating when a vehicle is stationary.

Referring to FIG. 4 and FIG. 5, when the air conditioning device (7) is operating, an air flow from the display device (5) to the air conditioning device (7) may be formed through the third connection pipe (30). When the air conditioning device (7) is operating, regardless of whether the vehicle (2) is traveling or not, exhaust to the outside of the display device (5) may be implemented through the third connection pipe (30).

If the air conditioning device (7) is operated when the vehicle (2) is traveling, due to the influence of an airflow formed in an air inflow path of the vent hole (6) and the air conditioning device (7), air may be branched from the first connection pipe (10) to the second connection pipe (20) and the third connection pipe (30) as illustrated in FIG. 4. Air on the first connection pipe (10) may be branched and flow simultaneously to the second connection pipe (20) and the third connection pipe (30), thereby having a 'T'-shaped flow form. If the air conditioning device (7) is operated when the vehicle (2) is traveling, through the second connection pipe (20) and the third connection pipe (30), that is, by the vent hole (6) and the air conditioning device (7), the air inside the display device (5) may be quickly discharged.

If the air conditioning device (7) is operated when the vehicle (2) is stationary, air on the side of the first connection pipe (10) may pass by the second connection pipe (20) and directly go to the third connection pipe (30) as illustrated in FIG. 5. The air on the first connection pipe (10) may pass through the second inflow end portion (22) of the second connection pipe (20) and flow toward the third connection pipe (30), thereby an 'I'-shaped flow form. If the air conditioning device (7) is operated when the vehicle (2) is stationary, the air inside the display device (5) may be linked to an air flow of the air conditioning device (7) through the third connection pipe (30) and be forcibly allowed to flow into the air conditioning device (7).

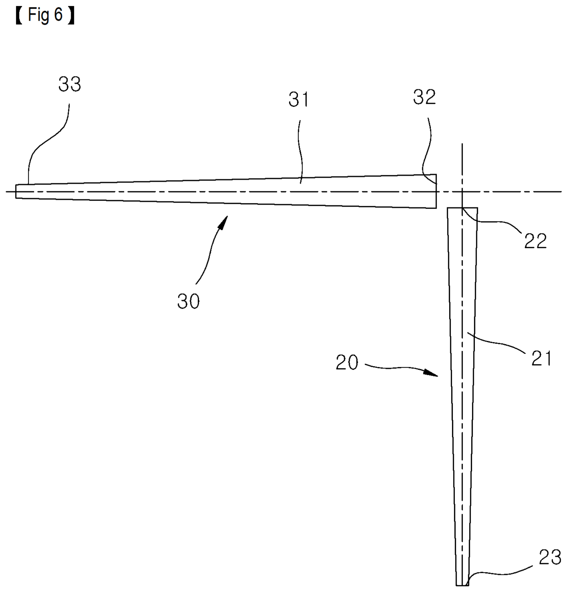

FIG. 6 is a conceptual view schematically illustrating a second connection pipe and the width of a flow path of the second connection pipe according to an embodiment of the present invention.

Referring to FIG. 6, the second connection pipe (20) may have a width decreasing from the first connection pipe (10) toward the vent hole (6). Here, the width may refer to the size of a flow path, a cross-sectional area. A flow path of the second connection pipe main body (21) may have a shape in which the width and cross-sectional area decrease from the second inflow end portion (22) toward the first exhaust end portion (23). That is, the second connection pipe (20) may have a shape in which the flow path becomes narrower from an upstream toward a downstream.

As the second connection pipe (20) has the shape in which the flow path becomes narrower from an upstream toward a downstream, when air passes through the second connection pipe (20), high pressure may be formed on the side of the second inflow end portion (22) of the second connection pipe (20) having a relatively wide flow path, and relatively, low pressure may be formed on the side of the first exhaust end portion (23). Since air naturally flows from high pressure toward low pressure, by using a difference in pressure formed due to a difference in width of the flow path of the second connection pipe (20), an air flow to the outside of the vehicle (2) through the second connection pipe (20) as illustrated in FIG. 3 may be more clearly and stably formed.

In addition, the third connection pipe (30) may also have, like the second connection pipe (20), a width decreasing from the first connection pipe (10) toward the air conditioning device (7). A flow path of the third connection pipe main body (31) may have a shape in which the width and cross-sectional area decrease from the third inflow end portion (32) toward the second exhaust end portion (33). That is, the third connection pipe (30) may have a shape in which the flow path becomes narrower from an upstream toward a downstream.

As the third connection pipe (30) has the shape in which the flow path becomes narrower from an upstream toward a downstream, when air passes through the third connection pipe (30), high pressure may be formed on the side of the third inflow end portion (32) of the third connection pipe (30) having a relatively wide flow path, and relatively, low pressure may be formed on the side of the second exhaust end portion (33). Since air naturally flows from high pressure toward low pressure, by using a difference in pressure formed due to a difference in width of the flow path of the third connection pipe (30), an air flow to the air conditioning device (7) through the third connection pipe (30) as illustrated in FIG. 4 and FIG. 5 may be more clearly and stably formed.

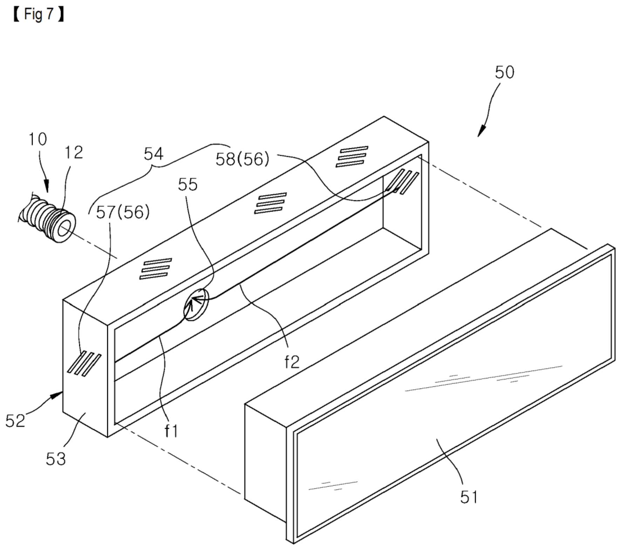

FIG. 7 is an exploded perspective view of key components, which is schematically illustrating a display device and a first connection pipe according to an embodiment of the present invention.

Referring to FIG. 7, the display device (5) may include a display module (51) and a cover (52). The display module (51) may be disposed such that information necessary for driving is displayed toward a passenger space in which a driver and a passenger are on board. The cover (52) is coupled to the display module (51), and may be fixed to the instrument panel (3).

The display module (51) may include an LCD module (symbol not shown), and an electrical component (symbol not shown) and the like connected thereto. A screen display unit (symbol not shown) of the display module (51) may be disposed at the rear of the instrument panel (3) to be exposed toward the passenger space. The cover (52) may be disposed in front of the display module (51) to cover the remaining portion except for the screen display unit, and may be disposed inside the instrument panel (3).

The cover (52) may include a cover main body (53) and a plurality of air holes (54) formed to penetrate the cover main body (53). The cover main body (53) may have a box shape that can cover the display module (51) and the electrical component. The air hole (54) may be formed in plurality on the cover main body (53), and some of the plurality of the air holes may be connected to communicate with the first connection pipe (10). An exhaust hole (55) and a plurality of inflow holes (56) may be included.

The exhaust hole (55) may form a flow path through which the air inside the display device (5) may flow to the first connection pipe (10). Among the plurality of air holes (54), an air hole (54) positioned to face the first inflow end portion (12) of the first connection pipe (10) may be referred to as the exhaust hole (55). The first inflow end portion (12) of the first connection pipe (10) may have a structure of an airtightable elastic ring and be inserted to penetrate the exhaust hole (55) to be coupled thereto. In addition, the first inflow end portion (12) of the first connection pipe (10) may be airtightly fixed to an outer surface of the cover main body (53) by means of a separate bracket member (not shown) or the like.

The inflow hole (56) may form a flow path through which air can flow into the display device (5). The plurality of inflow holes (56) including a first inflow hole (57) and a second inflow hole (58) may be disposed in a plurality of places spaced apart from each other. The plurality of inflow holes (56) may be provided on the cover main body (53) and disposed spaced apart from each other in up-down and left-right directions.

By the first inflow hole (57), a first air flow (f1) continuing from one side portion of the cover (52) to the exhaust hole (55) may be formed inside the display device (5). By the second inflow hole (58), a second air flow (f2) continuing from the other side portion of the cover (52) to the exhaust hole (55) may be formed inside the display device (5).

As an example, the first inflow hole (57) may be formed on a left side portion of the cover (52), and the second inflow hole (58) may be formed on a right side portion of the cover (52). By the first inflow hole (57) and the second inflow hole (58), the first air flow (f1) continuing from the left side portion of the cover (52) to the exhaust hole (55) in a middle portion of the cover (52), and the second air flow (f2) continuing from the right side portion of the cover (52) to the cover exhaust hole (55) may be formed.

By forming a plurality of air flows having different paths from each other inside the cover (52) as described above, an air flow may be formed throughout the inside of the cover (52) without a section in which air is stagnant inside the cover (52). By the air flows described above, heat generated in the display module (51) when the display device (5) is operating may be actively emitted.

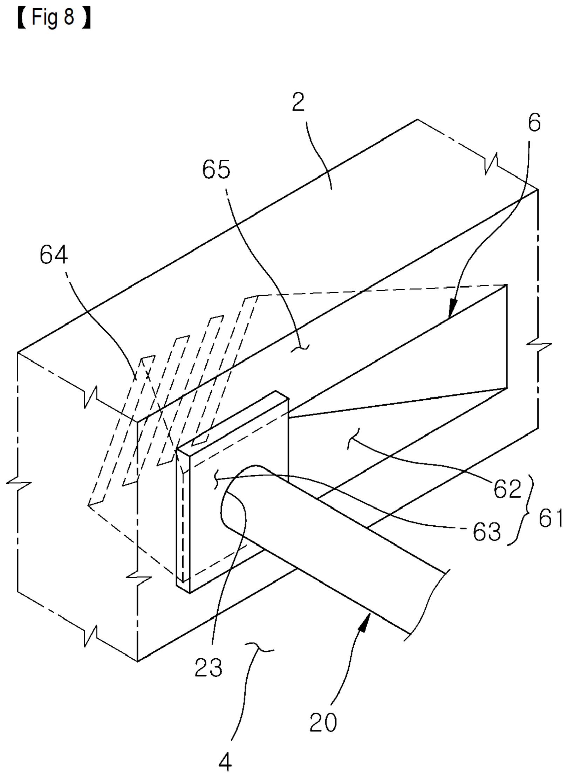

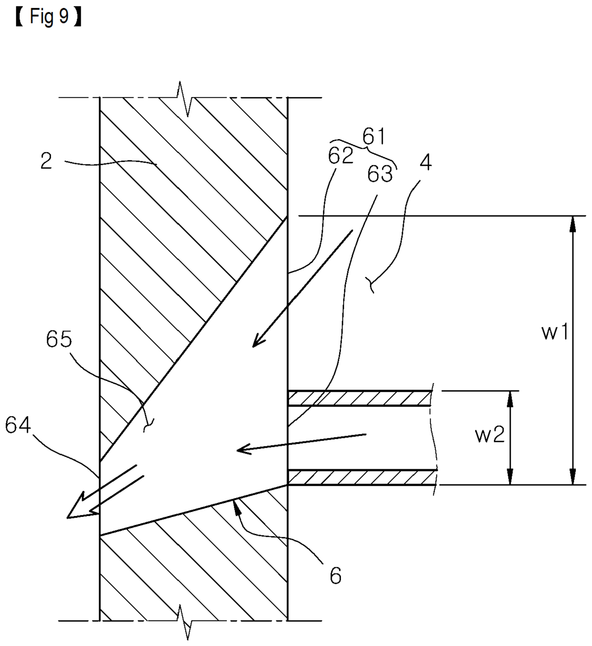

FIG. 8 is a perspective view schematically illustrating a vent hole and a second connection pipe according to an embodiment of the present invention, and FIG. 9 is a conceptual view illustrated to describe an air flow by a vent hole and a second connection pipe according to an embodiment of the present invention.

Referring to FIG. 8 and FIG. 9, the vent hole (6) according to an embodiment of the present invention may include a vent inflow end (61), a vent discharge end (64), and a vent hole main body (65).

The vent hole main body (65) may be formed to penetrate the inside and the outside of a vehicle body. The vent inflow end (61) is in contact with the inside of the vehicle (2), and may be connected to the second connection pipe (20). The vent inflow end (61) may be in contact with at least one among the engine room (4) space, the passenger space, and the trunk space of the vehicle (2). The vent discharge end (64) may be in contact with the outside of the vehicle (2). The vent discharge end (64) may be positioned on a front side of the vehicle (2), and may be positioned on a side surface close the driver's seat.

The vent hole main body (65) is formed between the vent inflow end (61) and the vent discharge end (64), and when the vehicle (2) is traveling, an air flow toward the outside of the vehicle (2) may be formed inside the vent hole main body (65) due to a difference in pressure formed between the vent inflow end (61) and the vent discharge end (64). A flow path of the vent hole main body (65) may also have, like the second connection pipe (20) and the third connection pipe (30), a shape in which the flow path becomes narrower from an upstream toward a downstream. That is, the vent hole main body (65) may have a shape in which the width of a flow path becomes smaller from the vent inflow end (61) toward the vent discharge end (64).

The vent inflow end (61) may have a first width (w1). The vent inflow end (61) may include a first inflow end portion (62) and a second inflow end portion (63). The second connection pipe (20) may be coupled to the second inflow end portion (63), which is a part of the vent inflow end (61). Accordingly, the first inflow end portion (62), to which the second connection pipe (20) is not coupled, may be open toward the inside of the vehicle (2), and the second inflow end portion (63) may communicate with the second connection pipe (20).

The first inflow end portion (62) is formed to be open toward the inside of the vehicle (2), and the air inside the vehicle (2) may flow into the vent hole (6) through the first inflow end portion (62). When the vent inflow end (61) is disposed in contact with the inside of the engine room (4), the vent inflow end (61) may form a passage through which the air inside the engine room (4) flows into the vent hole main body (65).

The first exhaust end portion (23) of the second connection pipe (20) may be installed to cover a portion of the vent inflow end (61). The vent inflow end (61) may have the first width (w1) in a front-rear direction, and the second inflow end portion (63) may have a second width (w2) smaller than the first width (w1) and be disposed in one among a front portion, a middle portion, and a rear portion of the vent inflow end (61).

The first exhaust end portion (23) of the second connection pipe (20) may include an exhaust flow path portion (symbol not shown) which forms a flow path through which air can be exhausted, and a fixed frame portion (symbol not shown) connected to an edge portion of the exhaust flow path portion and fixedly coupled to an edge portion of the vent inflow end (61). The fixed frame portion has a width and a shape corresponding to the edge portion of the vent inflow end (61), and may come into close contact and surface contact with the edge portion of the vent inflow end (61). In a state in which the fixing frame portion is in contact with the edge portion of the vent inflow end (61), the first exhaust end portion (23) of the second connection pipe (20) may be fixed to an inner wall of the engine room (4) by using a fastening member such as a bolt.

The second inflow end portion (63) of the second connection pipe (20) may be coupled to the vent inflow end (61) by the above-described assembly, and may communicate with the vent hole main body (65). In FIG. 9, a structure in which the second inflow end portion (63) is disposed at the rear portion of the vent inflow end (61) is disclosed. In this case, the exhaust flow path portion of the first exhaust end portion (23) of the second connection pipe (20) may be disposed side by side in a left-right direction at the rear of the first inflow end portion (62). According to the above-described disposition, the second connection pipe (20) may be disposed closer to the display device (5) at the rear on the engine room (4).

The air inside the display device (5) may flow into the inside of the vent hole (6) through the second connection pipe (20) and the second inflow end portion (63). Due to a difference in pressure between the inside and the outside of the vehicle (2) generated when the vehicle (2) is traveling, the air inside the engine room (4) and the air inside the display device (5) may flow into the vent hole main body (65) through the first inflow end portion (62) and the second inflow end portion (63), respectively, and may be discharged to the outside of the vehicle (2) through the vent discharge end (64).

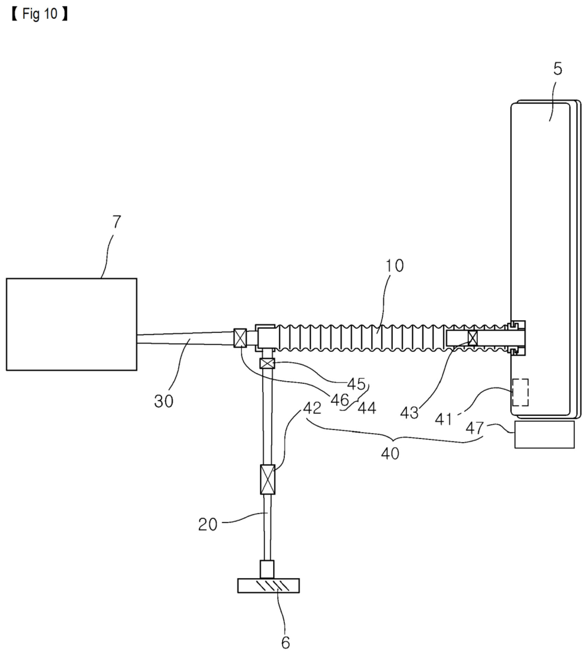

FIG. 10 is a conceptual view schematically illustrating a structure of a control device according to an embodiment of the present invention.

The temperature maintenance apparatus (1) for the vehicle (2) display according to an embodiment of the present invention may further comprise a control device (40).

The control device (40) may adjust the sizes of the flow paths of the second connection pipe (20) and the third connection pipe (30) in accordance with the temperature of the display device (5) and the flow rate of air passing through the first connection pipe (10). By using the control device (40) to more actively limit the internal temperature of the display device (5) or the flow rate of air discharged to the outside of the display device (5) within a set range, the stability of an airflow range by the use of the temperature maintenance apparatus may be further improved.

The temperature maintenance apparatus (1) for the vehicle (2) display according to the present invention may implement an operation of discharging the air inside the display device (5) by an exhaust airflow naturally formed through the vent hole (6) when the vehicle (2) is traveling, and an inflow airflow into the air conditioning device (7) automatically formed when the air conditioning device (7) is operating.

If the control device (40) is provided, in implementing the above-described operation of the temperature maintenance apparatus (1) for the vehicle (2) display, if the display device (5) is out of a set temperature range, even when the vehicle (2) is stationary or the air conditioning device (7) is not operating, overheated air inside the display device (5) may be forcibly discharged by using the control device (40). In addition, if the flow rate or flow speed of air is out of a set flow rate range or a set flow speed range, the flow rate or flow speed of air discharged to the outside of the display device (5) may be further reduced by using the control device (40).

Referring to FIG. 10, the control device (40) according to an embodiment of the present invention may include a temperature sensor (41), an air blowing device (42), a flow rate sensor (43), a flow path opening/closing device (44), and an electronic control device (45).

The temperature sensor (41) may be installed on the display device (5). The temperature sensor (41) may be installed inside the display device (5), and may be fixedly installed on the cover (52). The temperature sensor (41) may be positioned close to a position at which the heating temperature is the highest in the display module (51).

The temperature sensor (41) is not limited to a specific structure and shape, including technology commonly known in the art, as long as it can measure the temperature of the display device (5) in real time. A portion of the cover (52) may include a heat transfer member (not shown) containing a metal material having excellent heat transfer performance, and the temperature sensor (41) may be installed on the outside of the cover (52) to be in contact with the heat transfer member.

The air blowing device (42) is installed in the second connection pipe (20), and may forcibly discharge the air inside the vehicle (2) to the outside during an on-operation. The air blowing device (42) may have a structure of an air blowing fan, and is not limited to a specific structure and shape, including technology commonly known in the art, as long as it can forcibly form an exhaust flow on the second connection pipe (20) in response to a control signal of the electronic control device (45).

Information on a temperature of the display module (51) sensed by the temperature sensor (41) may be transmitted to the electronic control device (45), and if the temperature sensed by the temperature sensor (41) is greater than a set temperature range, the electronic control device (45) may output a control signal for operating the air blowing device (42). When the air blowing device (42) is operating, regardless of whether the vehicle (2) is traveling or not and whether the air conditioning device (7) is operating or not, that is, even when the vehicle (2) is stationary or the air conditioning device (7) is not operating, the air inside the display device (5) may be forcibly discharged more actively.

The flow rate sensor (43) may sense the flow rate or speed of air passing through the first connection pipe (10). The flow rate sensor (43) is installed in the first connection pipe (10), and may sense the flow rate of the air passing through the first connection pipe (10).

Since the air inside the display device (5) is exhausted to the outside of the display device (5) through the first connection pipe (10), the flow rate of the air passing through the first connection pipe (10) may be a flow rate of the air discharged to the outside of the display device (5). By installing the flow rate sensor (43) in the first connection pipe (10), the flow rate of the air discharged to the outside of the display device (5) may be measured in real time. The flow rate sensor (43) is not limited to a specific structure and shape, including technology commonly known in the art, as long it can measure the flow rate or speed of air exhausted to the outside of the display device (5) in real time.

The flow path opening/closing device (44) is installed in at least one among the first connection pipe (10), the second connection pipe (20), and the third connection pipe (30) and may flexibly adjust the size of a flow path thereof. Here, flexibly adjusting the size of a flow path may refer to opening or closing the flow path, or adjusting by increasing or decreasing an opening width of the flow path. The flow path opening/closing device (44) is not limited to a specific structure and shape, including technology commonly known in the art, as long it can be installed in at least one among the first connection pipe (10), the second connection pipe (20), and the third connection pipe (30), and can flexibly adjust the size of a flow path thereof in response to a control signal of the electronic control device (45).

Information on the flow rate of the air discharged to the outside of the display device (5) sensed by the flow rate sensor (43) may be transmitted to the electronic control device (45), and if a flow rate of the air sensed by the flow rate sensor (43) is out of a set flow rate range, or if the speed of the air is greater than a set speed range, the electronic control device (45) may output a control signal for operating the flow path opening/closing device (44). When the flow path opening/closing device (44) is operating, the size of a flow path of at least one among the first connection pipe (10), the second connection pipe (20), and the third connection pipe (30) may be reduced by using the flow path opening/closing device (44), thereby further reducing the flow rate of the air discharged to the outside of the display device (5).

Referring to FIG. 10, the flow path opening/closing device (44) may be installed in each of the second connection pipe (20) and the third connection pipe (30). In installing the flow path opening/closing device (44) in the second connection pipe (20), it may be installed on the side of the second inflow end portion (22). During an operation of reducing the size of a flow path of the second inflow end portion (22) by using the flow path opening/closing device (44), a difference in the widths (cross-sectional area) of flow paths between the first exhaust end portion (23) and the second inflow end portion (22) may be further reduced, thereby reducing the amount of air flowing into the second connection pipe (20) as well as further reducing the influence of an exhaust flow due to a difference in pressure between the first exhaust end portion (23) and the second inflow end portion (22).

In installing the flow path opening/closing device (44) in the third connection pipe (30), it may be installed on the side of the third inflow end portion (32). During an operation of reducing the size of a flow path of the third inflow end portion (32) by using the flow path opening/closing device (44), a difference in the widths (cross-sectional area) of flow paths between the second exhaust end portion (33) and the third inflow end portion (32) may be further reduced, thereby reducing the amount of air flowing into the third connection pipe (30) as well as further reducing an active exhaust flow due to a difference in pressure between the second exhaust end portion (33) and the third inflow end portion (32).

The electronic control device (45) may control operations of the air blowing device (42) and the flow path opening/closing device (44) in response to sensing signals of the temperature sensor (41) and the flow rate sensor (43). If the temperature sensed by the temperature sensor (41) is greater than the set temperature range, the electronic control device (45) may output a control signal for operating the air blowing device (42). When the air blowing device (42) is operating, the air inside the display device (5) may be forcibly discharged more actively. If the flow rate of air sensed by the flow rate sensor (43) is out of a set flow rate range, or if the speed of the air is greater than a set speed range, the electronic control device (45) may output a control signal for operating the flow path opening/closing device (44). When the flow path opening/closing device (44) is operating, the flow rate of the air discharged to the outside of the display device (5) may be further reduced.

Although the present invention has been described with reference to the embodiments illustrated in the drawings, this is merely exemplary. It will be understood by those skilled in the art that various modifications and equivalent embodiments thereto may be implemented. Therefore, the true technical protection scope of the present invention should be determined by the following patent claims.

**[Description of Reference Numerals]**

| | | | |
|---|---|---|---|
| 1 : | Temperature maintenance apparatus for display | 2 : | Vehicle |
| 3 : | Instrument panel | 4 : | Engine room |
| 5 : | Display device | 6 : | Vent hole |
| 7 : | Air conditioning device | 10 : | First connection pipe |
| 11 : | First connection pipe main body | 12 : | First inflow end portion |
| 13 : | Pipe connection end portion | 14 : | Connection main body portion |
| 15 : | First branch connection portion | 16 : | Second branch connection portion |
| 20 : | Second connection pipe | 21 : | Second connection pipe main body |
| 22 : | Second inflow end portion | 23 : | First exhaust end portion |
| 24 : | Backflow prevention device | 30 : | Third connection pipe |
| 31 : | Third connection pipe main body | 32 : | Third inflow end portion |
| 33 : | Second exhaust end portion | 40 : | Control device |
| 41 : | Temperature sensor | 42 : | Blowing device |
| 43 : | Flow rate sensor | 44 : | Flow path opening/closing device |
| 45 : | Electronic control device | 51 : | Display module |
| 52 : | Cover | 53 : | Cover main body |
| 54 : | Air hole | 55 : | Exhaust hole |
| 56 : | Inflow hole | 57 : | First inflow hole |
| 58 : | Second inflow hole | 61 : | Vent inflow end |
| 62 : | First inflow end portion | 63 : | Second inflow end portion |
| 64 : | Vent discharge end | 65 : | Vent hole main body |
| f1 : | First air flow | f2 : | Second air flow |
| w1 : | First width | w2 : | Second width |

## Claims

1. A temperature maintenance apparatus for a vehicle display, the apparatus **characterized by** comprising:
a first connection pipe connected to a display device;
a second connection pipe having one end portion connected to the first connection pipe, and the other end portion connected to a vent hole forming an air flow to the outside of the vehicle when a vehicle is traveling; and
a third connection pipe having one end portion connected to at least one among the first connection pipe and the second connection pipe, and the other end portion connected to an air conditioning device.

2. The temperature maintenance apparatus for a vehicle display as claimed in claim 1, wherein
when the vehicle is traveling, an air flow from the display device toward the outside of the vehicle is formed through the second connection pipe, and
when the air conditioning device is operating, an air flow from the display device to the air conditioning device is formed through the third connection pipe.

3. The temperature maintenance apparatus for a vehicle display as claimed in claim 1, wherein
the first connection pipe comprises:
a first connection pipe main body disposed to extend from the display device installed in an instrument panel to an engine room, and having a bellows structure;
a first inflow end portion formed on one end portion of the first connection pipe main body, airtightly contacting the display device, and communicating with the inside of the display device through an air hole formed in the display device; and
a pipe connection end portion formed on the other end portion of the first connection pipe main body, and connected to at least one among the second connection pipe and the third connection pipe.

4. The temperature maintenance apparatus for a vehicle display as claimed in claim 3, wherein
the pipe connection end portion comprises:
a connection main body portion connected to communicate with the first connection pipe main body;
a first branch connection portion which is formed to be open in one side portion of the connection main body portion, and to which the second connection pipe is detachably assembled; and
a second branch connection portion which is formed to be open in the other side portion of the connection main body portion, and to which the third connection pipe is detachably assembled.

5. The temperature maintenance apparatus for a vehicle display as claimed in claim 1, wherein
the second connection pipe has
a width decreasing from the first connection pipe toward the vent hole.

6. The temperature maintenance apparatus for a vehicle display as claimed in claim 1, wherein
the second connection pipe comprises:
a second connection pipe main body connected to communicate with the first connection pipe;
a first exhaust end portion formed on an end portion of the second connection pipe main body, and communicating with the outside of the vehicle through the vent hole; and
a backflow prevention device installed on the second connection pipe main body or the first exhaust end portion, and preventing external air from flowing into the vehicle.

7. The temperature maintenance apparatus for a vehicle display as claimed in claim 1, wherein
the third connection pipe has
a width decreasing from the first connection pipe toward the air conditioning device.

8. The temperature maintenance apparatus for a vehicle display as claimed in claim 1, wherein
the third connection pipe comprises:
a third connection pipe main body connected to communicate with at least one among the first connection pipe and the second connection pipe; and
a second exhaust end portion formed on an end portion of the third connection pipe main body, connected to the air conditioning device, and forming a flow path through which air flows into the air conditioning device.

9. The temperature maintenance apparatus for a vehicle display as claimed in claim 1, wherein
the display device is installed in the instrument panel, and connected to the first connection pipe,
the vent hole is disposed on a side surface portion of the vehicle, and connected to the second connection pipe,
the air conditioning device is installed in the engine room, and connected to the third connection pipe, and
the second connection pipe is disposed to extend in a lateral direction between the first connection pipe and the third connection pipe extending in a front-rear direction.

10. The temperature maintenance apparatus for a vehicle display as claimed in claim 1, wherein
the display device comprises:
a display module which displays information; and
a cover coupled to the display module, and fixed to the instrument panel,
the cover including
a cover main body covering the display module, and
an air hole provided in plurality on the cover main body, and some of the air holes being communicatively connected to the first connection pipe.

11. The temperature maintenance apparatus for a vehicle display as claimed in claim 10, wherein
the air hole comprises:
an exhaust hole forming a flow path through which air inside the display device flows to the first connection pipe; and
an inflow hole forming a flow path through which air flows into the display device,
the inflow hole including
a first inflow hole formed in one side portion of the cover, and forming, inside the display device, a first air flow continuing from the one side portion of the cover to the exhaust hole, and
a second inflow hole formed in the other side portion of the cover, and forming, inside the display device, a second air flow continuing from the other side portion of the cover to the exhaust hole.

12. The temperature maintenance apparatus for a vehicle display as claimed in claim 1, wherein
the vent hole comprises:
a vent inflow end which is in contact with the inside of the vehicle, and to which the second connection pipe is connected;
a vent discharge end in contact with the outside of the vehicle; and
a vent hole main body which is formed between the vent inflow end and the vent discharge end, and in which an air flow toward the outside of the vehicle is formed due to a difference in pressure formed between the vent inflow end and the vent discharge end when the vehicle is traveling.

13. The temperature maintenance apparatus for a vehicle display as claimed in claim 12, wherein
the vent inflow end has a first width, and
the second connection pipe has a second width smaller than the first width, and is installed to cover a portion of the vent inflow end.

14. The temperature maintenance apparatus for a vehicle display as claimed in claim 13, wherein
the vent inflow end comprises:
a first inflow end portion which is formed to be open toward the inside of the vehicle, and into which air inside the vehicle flows; and
a second inflow end portion to which the second connection pipe is coupled, and into which air inside the display device flows.

15. The temperature maintenance apparatus for a vehicle display as claimed in claim 1, further comprising
a control device which adjusts the sizes of flow paths of the second connection pipe and the third connection pipe, in accordance with the temperature of the display device and the flow rate of air passing through the first connection pipe.

16. The temperature maintenance apparatus for a vehicle display as claimed in claim 15, wherein
the control device comprises:
a temperature sensor installed on the display device;
an air blowing device installed in the second connection pipe, and forcibly exhausting the air inside the vehicle to the outside during an on-operation;
a flow rate sensor which senses the flow rate of the air passing through the first connection pipe;
a flow path opening/closing device installed on at least one among the first connection pipe, the second connection pipe, and the third connection pipe, and flexibly adjusting the size of a flow path; and
an electronic control device which controls the operation of the air blowing device and the flow path opening/closing device in response to sensing signals of the temperature sensor and the flow rate sensor.
